# EUROPEAN PATENT SPECIFICATION

(11) **EP 1 286 596 B1**
(45) Date of publication and mention of the grant of the patent: **30.08.2006**
(21) Application number: 01949359.2
(22) Date of filing: 25.05.2001
(51) Int. Cl.: A21D 13/08, A23P 1/08, A21C 9/06, A21D 8/02, A23G 3/00

(54) **A FILLED SNACK HAVING A WAFER OUTER ENVELOPE, A METHOD AND AN APPARATUS FOR THE PRODUCTION THEREOF.**
GEFÜLLTES SNACK-PRODUKT MIT EINEM ÄUSSEREN WAFFELMANTEL, SOWIE VERFAHREN UND VORRICHTUNG ZU DESSEN HERSTELLUNG
EN-CAS FOURRE PRESENTANT UNE ENVELOPPE EXTERNE EN GAUFRETTE, PROCEDE ET APPAREIL PERMETTANT SA PRODUCTION

(30) Priority: 09.06.2000 IT MI001296
(43) Date of publication of application: 05.03.2003
(73) Proprietor: BARILLA G. e R. Fratelli S.p.A., 43100 Parma (IT)
(72) Inventor: BURIANI, Ernesto, I-42100 Reggio Emilia (IT); SCHIARETTI, Enrico, I-43100 Parma (IT); TERZOLI, Corrado, I-20011 Corbetta (IT); BUSCAGLINO, Jean-Paul, I-28100 Novara (IT)
(74) Representative: Ferreccio, Rinaldo
(86) International application number: PCT/EP2001/006018
(87) International publication number: WO 2001/093687

(56) References cited:
- EP-A- 0 399 995
- EP-A- 0 814 664
- EP-A- 1 078 577
- WO-A-99/02042
- FR-A- 2 803 719
- US-A- 3 867 559
- US-A- 4 427 703
- US-A- 4 439 124

## Description

### Field of Application

The present invention broadly pertains to the food industry.

Specifically, the invention relates to a method and an apparatus for making a sweet snack comprising a filled wafer.

### Prior Art

Wafers, or waffles, are widely utilized in the food industry to produce conical and tubular envelopes, or biscuits and the like, and are obtained by either of two methods. In a first method, a wafer is prepared by flash baking, in a baking oven or under a heated press platen, a batter having a high sugar content. The hot wafer is then rolled up into a conical or a cylindrical final form.

This forming step must be carried out promptly, while the wafer is still hot, as on cooling the wafer becomes brittle and is easily crumbled.

In the second method, the wafer is molded from a batter incorporating a very small amount (not exceeding 5%) of or no sugar at all. This because a large proportion of sugar would make the wafer difficult to be removed from the mold. Wafers obtained by this method tend to be spongy in texture and lack the crisp character of wafers obtained by the first method.

The term "wafer" should be understood hereinafter to indicate exclusively a wafer of the crisp variety to be obtained by the first of the above methods.

A description of an industrial process for making crisp rolled-up wafers can be found in US Patent 4 624 855, for example.

Rolled-up wafers prepared by the first of the above methods are specially suitable to produce ice-cream or whipped milk cream cones, by reason of their crisp biscuit-like texture making a pleasant contrast to the flowing consistency of ice-cream or whipped cream.

Also known are tubular wafers, which are made by rolling up a wafer web into a spiral form about a cylindrical or prismatic core support. During the rolling operation, there occurs a partial overlapping of the web, so that the wall thickness of the tubular wafer is doubled in the region of overlap. An example of a method for producing such tubular wafers is provided by US 3 867 559.

EP-A-0 814 664 discloses a structure for a food product with a wafer shell and a creamy filling, wherein the wafer shell has a substantially rectangular cross-sectional shape and is constituted by two wafer half-shells coupled facing one another.

EP-A-1 078 577, which is relevant only under Art. 54(3) and (4) EPC, discloses a filled sugar-based wafer tube.

EP-A-0 399 995 discloses a process for producing a filled bakery product, comprising the steps of preparing a liquid dough, forming it into a sheet, baking the sheet and shaping the baked sheet into a hollow body after impregnating the baked sheet with an edible protein solution so as to make it flexible, and finally drying the hollow body and possibly filling it with an edible filling.

Filled tubular wafers are disclosed by US 4 427 703 and WO 99/02042.

US 4 439 124 describes a machine for automatically making rolled food products such as egg rolls and the like. This machine includes means for depositing a an elongated shaped food stuffing on an edible skin, such as e.g. a crepe, and means for folding the edible skin around the shaped stuffing.

In an effort to produce ever new snack articles that would distinguish themselves from those currently available on the market (e.g., conventional snacks comprising sponge cake or puff pastry, or chocolate-based bars and the like), the Applicant set about to provide a method and an apparatus for producing a snack article of adequate shelf-life at room temperature, which would duplicate the contrasting quality of the crisp/soft association that is typical of ice-cream cones incorporating a crisp wafer, and be adapted for carrying in one's pocket.

### Summary of the Invention

The problem underlying the invention is that of providing a filled snack that would keep at room temperature for at least two months, have a creamy fill enclosed in a thin envelope of a crisp wafer, and be a suitable shape to fit in one's pocket.

The above problem could not be solved by just filling a wafer cone with any cream that would keep at room temperature, for the conical shape is inconvenient to accommodate in an individual's pocket.

On the other hand, an attempt to overcome this by using the aforementioned thick tubular wafers would result in the crisp/soft contrast of the envelope to the filling being nullified by too thick a wafer.

The problem underlying this invention has been solved by the method according to claim 1 and the apparatus according to claim 3.

The creamy filling of the snack obtained with the method according to the invention is substantially anhydrous, preferably sweet, and comprises sugars and fats. It may optionally incorporate such additional ingredients as cocoa, chocolate, hazel nuts, puffed cereals, etc..

The method of this invention comprises the steps of:
- baking a batter to provide a wafer;
- laying said wafer, while still hot, onto a forming die provided with a straight groove along a predetermined axis x-x, said groove having a rectangular cross-sectional shape;
- driving said wafer into the groove by moving a bar-shaped plug of rectangular cross-section down into the groove, whereby two laps of the wafer are turned up from said forming die and set vertically;
- folding said tumed-up wafer laps onto the bar-shaped plug to form a tubular wafer with a substantially rectangular cross-sectional shape;
- releasing the formed tubular wafer from said bar-shaped plug by withdrawing the plug bar from the groove along the axis x-x; and
- filling said tubular wafer with the filling.

Advantageously, the tubular wafer is filled as the bar-shaped plug is being withdrawn, using a filling dispenser housed within the bar-shaped plug.

This invention also relates to an apparatus implementing the method just described.

Brief Description of the Drawings

The apparatus and method of this invention will be further described with reference to the accompanying drawing figures, of which:
- Figure 1 is a perspective view of a filled snack according to the invention;
- Figure 2 is a top view of the filled snack shown in Figure 1;
- Figure 3 is a cross-sectional view of the filled snack, taken along line III-III in Figure 1;
- Figure 4 is a top plan view of a wafer;

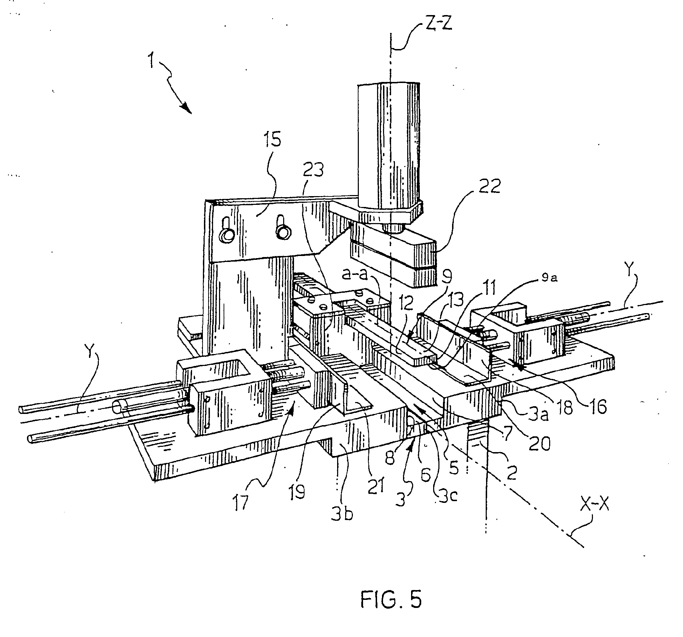

- Figure 5 is a schematic perspective view of an apparatus for making the snack of Figure 1;

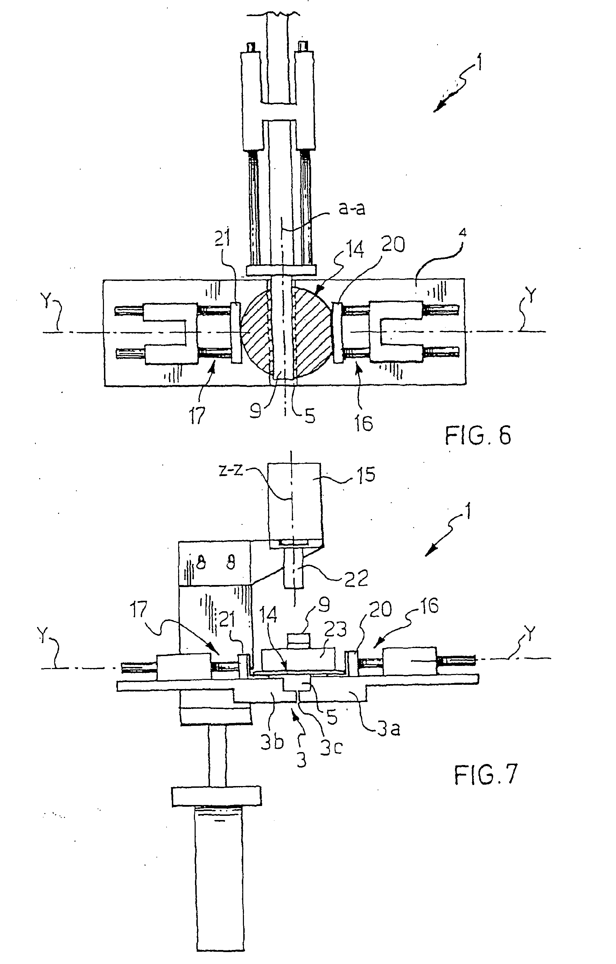

- Figure 6 is a schematic plan view of a detail of the apparatus shown in Figure 5;
- Figure 7 is a schematic elevation view of the apparatus shown in Figure 5; and
- Figures 8 to 11 are perspective views of a wafer at successive stages of the process for making it in accordance with the inventive method.

### Detailed Description of the Invention

Referring to the accompanying drawings, an apparatus according to this invention is shown generally at 1.

The apparatus 1 comprises a frame 2 carrying a forming die 3. The forming die 3 is comprised of a flat horizontal surface 4 and a straight groove or flute 5 having a horizontal axis x-x. The groove 5 has a rectangular cross-sectional shape with vertical short sides, so that a bottom 6 and opposed vertical walls 7, 8 are defined therein.

It should be noted that the forming die 3 is constructed as two halves 3a and 3b that can be clamped together along a midline 3c of the bottom 6 and separated from each other a distance only slightly greater than the width of the bottom 6.

A bar-shaped plug 9 has an axis a-a lying in the same direction as the axis x-x parallel to the groove 5, the bar-shaped plug 9 being guided on the frame 2 for movement along a vertical axis z-z. The bar-shaped plug 9 is tubular in shape with a hollow interior 9a, has a rectangular cross-sectional shape with vertical short sides, and can be shifted between an upper position above the groove 5 and a lower position into the groove 5.

The bar-shaped plug 9 has an underside 10, oppositely located sidewalls 11, 12, and a top side 13.

It should be noted that the rectangular cross-section of the bar-shaped plug 9 is slightly smaller than the rectangular cross-section of the groove 5. Accordingly, with the bar-shaped plug 9 lowered into the groove, a U-shaped gap remains between the groove bottom 6 and the plug underside 10, as well as between the groove sidewalls 7, 8 and the plug sidewalls 11, 12, the size of the gap being substantially equal to the thickness of a wafer 14. In practice, the gap will not exceed 3 mm.

A head 15 is guided for movement on the frame 2 to shift the plug 9 vertically.

Also mounted on the frame 2 are two slides 16 and 17 horizontally movable along a perpendicular axis y-y to the axis x-x. These slides locate on either sides of the groove 5 and are adapted to be moved in succession towards and over the groove 5. The slides 16 and 17 have thrust strips 18 and 19, respectively, mounted to face the groove by respective straight working edges 20 and 21 thereof.

The head 15 carries a heated pressure pad 22, which is movable in a guided fashion into positions, respectively removed from and closer to the groove, along the vertical axis z-z.

It should be noted that the bar-shaped plug 9 is mounted to the head 15 through the intermediary of a slide 23 that can be shifted horizontally along the axis x-x. Thus, the bar-shaped plug 9 can be moved from a position inside the groove to a position outside the groove.

A filling dispenser, not shown, is mounted in the hollow interior 9a of the bar-shaped plug 9, and is operated as the bar-shaped plug is moved from inside the groove to its position outside the groove.

The above apparatus 1 further includes a feeder means, not shown, for feeding one wafer 3 at a time onto the flat surface 4 of the forming die 3, in a position defined by the straight working edges 20 and 21, with the slides 16 and 17 moved away from the groove.

Preferably, the wafer 14 has a substantially circular shape, of a diameter D (equal 110 mm in the example), less a segment 14a included between a chord 14b and an arc 14c. The wafer 14 has a width dimension C measured to the chord 14b (in the example, 90 mm). When placed on the flat surface 4, the wafer 14 has the chord 14b in contact with the straight working edge 20.

The above apparatus 1 is then completed with a transport means, not shown, which may be of the belt type and is preferably formed, beneath the die 3, with pits for easier separation of the finished snack article.

The apparatus of this invention further comprises a drive means, not shown because consisting of conventional pneumatic or electric motors, for driving the aforementioned movable elements.

### Detailed Description

The method of this invention will be illustrated by means of the following non-limitative Example.

### EXAMPLE

The preparation of a wafer to provide the envelope for the filled snack article will be described first.

Such a wafer can be prepared from a batter having the following composition by weight, in percent of the overall batter weight:

| | |
|---|---|
| 0-type flour | 36.4% |
| Water | 35.6% |
| Granulated sugar | 18.2% |
| Egg yolk | 3.6% |
| Milk cream | 3.6% |
| Powdered malt extract | 1.5% |
| Coconut oil | 0.7% |
| Powdered soy lecithin | 0.2% |
| Ammonium bicarbonate | 0.1% |
| Sodium bicarbonate | 0.1% |

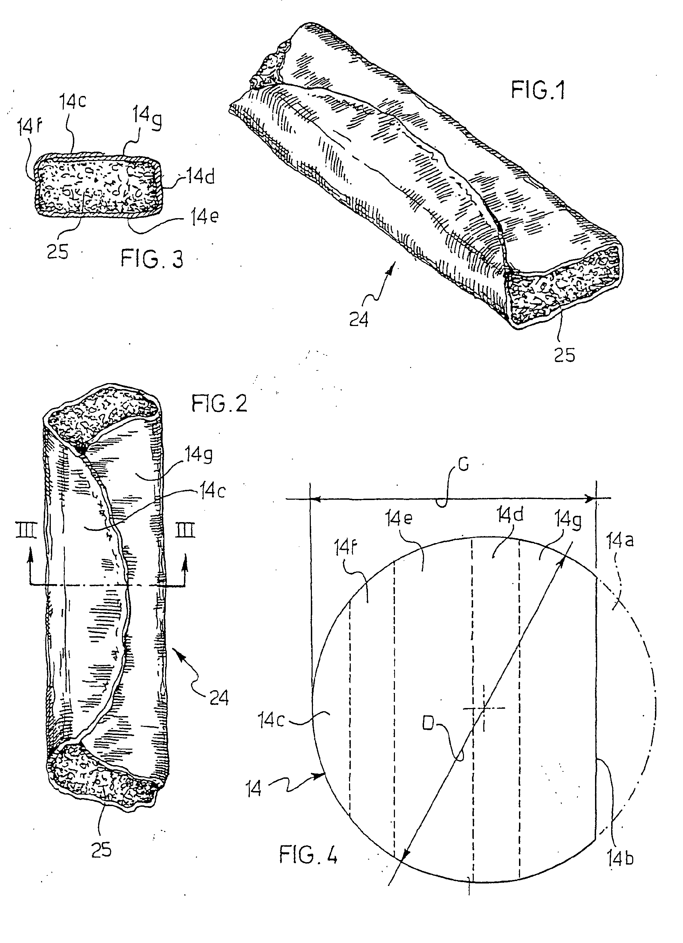

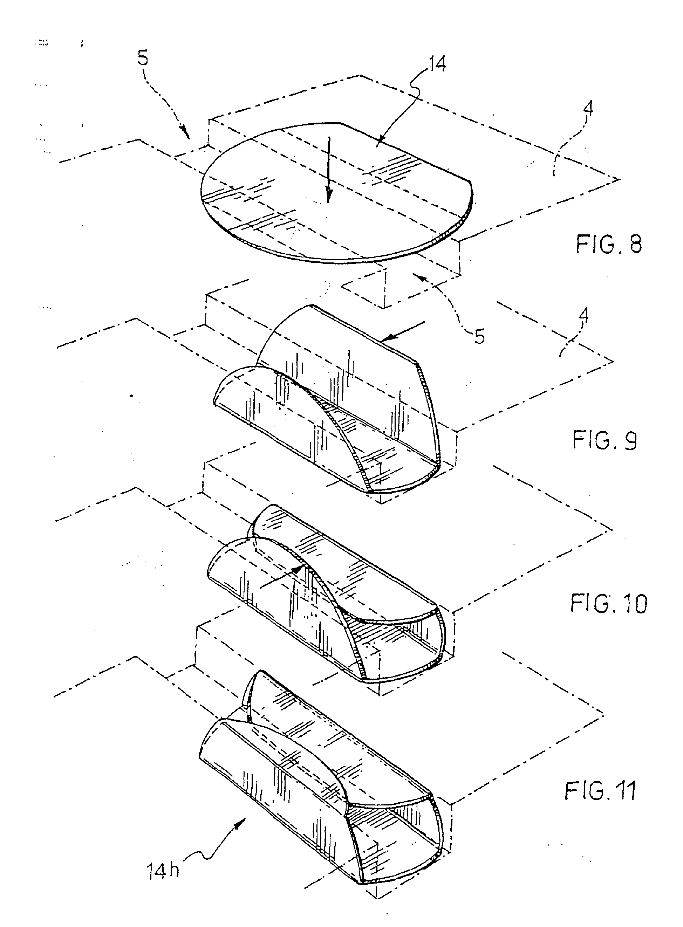

The above ingredients are mixed into a batter. Metered batter quantities, of about 10 ml each, are poured onto heated wafer plates that have been brought to a temperature of 200°C, and are fashioned into their final form shown in Figure 4. After a baking time of 40 seconds, a wafer is obtained of substantially circular shape, as specified hereinabove, and approximately 1,5 to 2 mm thick. The wafer is immediately transferred onto the surface 4 (Figure 8) of the forming die 3, in the space between the straight working edges 20 and 21, with the chord 14b laid along the working edge 21, the bar-shaped plug 9 and pressure pad 22 being in their raised positions.

Directly after the wafer is placed onto the surface 4, the bar-shaped plug 9 is moved down to contact the wafer and drive it into the groove, with portions 14d, 14e and 14f of the wafer filling the gap between the vertical wall 7 and the sidewall 11, between the bottom 6 and the underside 10, and between the vertical wall 8 and the sidewall 12 (Figure 9).

At this stage, the wafer is forced into a U-shape, with laps 14g, 14c thereof set to project vertically upwards from the surface 4 of the forming die 3.

Thereafter, by causing the straight working edges 20 and 21 of the slides 16 and 17 to move towards the groove, first the lap 14g is folded over the top side 13 of the bar-shaped plug 9 (Figure 10), and then the lap or lunule 14c is folded over the top side 13 of the bar-shaped plug 9 (Figure 11) and sealed to the lap 14g to form a tubular wafer 14h having a substantially rectangular cross-sectional shape.

At this stage, the slides 16 and 17 are moved back into their original positions, and the pressure pad 22, heated at about 150°C, is lowered to enhance the bond between the juxtaposed wafer laps.

The bar-shaped plug 9 is withdrawn along the axis x-x while the filling dispenser is operated to dispense a predetermined amount of filling into the tubular wafer 14h. Thereafter, the bar-shaped plug 9 is raised vertically and again shifted horizontally to return it to its position above the groove, in readiness for another cycle.

A snack article 24, complete with its filling 25, is presently released by separating the die halves 3a and 3b, and dropped onto the transport means for conveyance to further processing stations.

The above cycle is repeated by laying a new wafer onto the die, now cleared of the filled wafer.

The filling used for filling the folded wafer may be of several different types, but is preferably anhydrous and comprised mainly of fats.

In this example, the filling has the following composition:

| | |
|---|---|
| Powdered sugar | 49.8% |
| Hydrogenated coconut oil | 20.9% |
| Powdered cocoa | 14.0% |
| Cocoa paste | 11.0% |
| Hazel nut paste | 4.0% |
| Powdered soy lecithin | 0.3% |

The filling is prepared by mixing the above ingredients to homogeneity in a planetary mixer.

Before delivering them to a packaging station, the filled wafers are finished by having minced hazel nut adhere to the filling surface not covered by the enveloping wafer.

The resultant filled snack exhibits a degree of raggedness along the edges and at the folded wafer laps, effectively duplicating the appearance of such home-made preparations as pancakes or omelettes.

A major advantage of a snack article obtained with the method according to the invention is that the crisp/soft contrast effect sought is made inherent to an article that can fit conveniently in one's pocket.

## Claims

1. A method of making a snack (24) comprising a tubular wafer (14h) having a substantially rectangular cross-sectional shape and filled with a creamy filling (25), said method comprising the steps of:
- baking a batter to provide a wafer (14);
- laying said wafer (14), while still hot, onto a forming die (3) provided with a groove (5) extending along a predetermined axis (x-x), said groove having a rectangular cross-sectional shape;
- driving said wafer (14) into the groove (5) by moving a bar-shaped plug (9) of rectangular cross-section down into the groove, whereby two laps (14c,14g) of the wafer are turned up from said forming die (3) and set vertically;
- folding said turned-up wafer laps (14c,14g) onto the bar-shaped plug (9) to form a tubular wafer (14h) with a substantially rectangular cross-sectional shape;
- releasing the formed tubular wafer (14h) from said bar-shaped plug (9) by withdrawing the bar-shaped plug (5) from the groove (5) along said predetermined axis (x-x); and
- filling said tubular wafer (14h) with the filling (25).

2. A method according to Claim 1, wherein said tubular wafer is filled with the filling (25) while withdrawing the bar-shaped plug (9), by means of a filling dispenser housed within the bar-shaped plug (9).

3. An apparatus (1) implementing the method of Claim 1, comprising a frame (2) carrying a forming die (3) provided with a groove (5), said groove extending along a predetermined axis (x-x) and having a rectangular cross-sectional shape, a bar-shaped plug (9) having a parallel axis (a-a) to said predetermined axis (x-x) and a rectangular cross-sectional shape, said bar-shaped plug being movable along a vertical axis (z-z) perpendicularly to said predetermined axis (x-x) between an upper position above the groove (5) and a lower position into the groove (5), and being adapted to be shifted along said axis (x-x) for withdrawal from the groove (5)..

4. An apparatus (1) according to Claim 3, further comprising two slides (16,17) guided for movement in the frame (2) along a perpendicular axis (y-y) to said axes (x-x, z-z) and shiftable in succession towards the groove (5) from respective positions removed from said groove.

5. An apparatus (1) according to Claim 4, further comprising a pressure pad (22) guided for movement in the frame (2) and shiftable towards the groove (5) along a vertical axis (z-z).

6. An apparatus (1) according to Claim 5, wherein said bar-shaped plug (9) is of a tubular construction defining a hollow interior (9a).

7. An apparatus (1) according to Claim 6, comprising a filling dispenser located in said hollow interior (9a) and fixed to said bar-shaped plug (9).

## Patentansprüche

1. Verfahren zur Herstellung eines Snacks (24), der eine zu einem Rohr geformte Scheibe (14h) umfaßt, das eine im Wesentlichen rechteckige Querschnittsform hat und mit einer cremigen Füllmasse (25) gefüllt ist, wobei das Verfahren die Schritte umfaßt:
- Backen eines Backteigs zur Bereitstellung einer Scheibe (14);
- Auflegen der Scheibe (14), in deren Warmzustand, auf ein Formwerkzeug (3), das mit einer Vertiefung (5) versehen ist, die entlang einer vorbestimmten Achse (x-x) verläuft und eine rechteckige Querschnittsform hat;
- Einbringen der Scheibe (14) in die Vertiefung (5), indem ein stabförmiges Einschubteil (9) mit rechteckigem Querschnitt nach unten in die Vertiefung bewegt wird, wobei vom Formwerkzeug (3) zwei Lappen (14c, 14g) der Scheibe hochgeschlagen und vertikal aufgestellt werden;
- Umlegen der hochgeschlagenen Scheibenlappen (14c, 14g) auf das stabförmige Einschubteil (9), um die zu einem Rohr geformte Scheibe (14h) mit im Wesentlichen rechteckiger Querschnittsform zu bilden;
- Lösen der gebildeten rohrförmigen Scheibe (14h) vom stabförmigen Einschubteil (9) durch Zurückziehen des stabförmigen Einschubteils (9) aus der Vertiefung (5) entlang der vorbestimmten Achse (x-x); und
- Füllen der rohrförmigen Scheibe (14h) mit der Füllmasse (25).

2. Verfahren nach Anspruch 1, bei dem die rohrförmige Scheibe während des Zurückziehens des stabförmigen Einschubteils (9) mit der Füllmasse (25) befüllt wird, und zwar mittels einer innerhalb des stabförmigen Einschubteils (9) untergebrachten Füllmassen-Abgabevorrichtung.

3. Vorrichtung (1) zur Durchführung des Verfahrens nach Anspruch 1, mit einem Gestell (2), das ein mit einer Vertiefung (5) versehenes Formwerkzeug (3) trägt, wobei die Vertiefung entlang einer vorbestimmten Achse (x-x) verläuft und eine rechteckige Querschnittsform hat, einem stabförmigen Einschubteil (9) mit einer zu der vorbestimmten Achse (x-x) parallelen Achse (a-a) und rechteckiger Querschnittsform, wobei das stabförmige Einschubteil entlang einer zur vorbestimmten Achse (x-x) senkrecht liegenden, vertikalen Achse (z-z) zwischen einer oberen Position oberhalb der Vertiefung (5) und einer unteren Position bewegbar ist, die in der Vertiefung (5) liegt, und dazu ausgelegt ist, daß es zum Herausziehen aus der Vertiefung (5) entlang der Achse (x-x) verschoben werden kann.

4. Vorrichtung (1) nach Anspruch 3, darüber hinaus zwei Schieber (16, 17) umfassend, die für eine Bewegung im Gestell (2) entlang einer zu den Achsen (x-x, z-z) senkrechten Achse (y-y) geführt sind und nacheinander aus jeweiligen von der Vertiefung (5) entfernten Positionen zu dieser hin verschoben werden können.

5. Vorrichtung (1) nach Anspruch 4, darüber hinaus einen Druckblock (22) umfassend, der für eine Bewegung im Gestell (2) geführt ist und entlang der vertikalen Achse (z-z) zur Vertiefung (5) hin verschoben werden kann.

6. Vorrichtung (1) nach Anspruch 5, bei der das stabförmige Einschubteil (9) eine rohrförmige Gestaltung hat, die einen Innenhohlraum (9a) bildet.

7. Vorrichtung (1) nach Anspruch 6, mit einer Füllmassen-Abgabevorrichtung, die in dem Innenhohlraum (9a) sitzt und an dem stabförmigen Einschubteil (9) befestigt ist.

## Revendications

1. Méthode de préparation d'un casse-croûte (24) constitué d'une gaufrette tubulaire (14h) de forme sensiblement rectangulaire en section et fourrée à l'aide d'une crème (25), ladite méthode comprenant les étapes suivantes :
- cuisiner une pâte pour faire une gaufrette (14),
- étendre cette gaufrette (14) encore chaude sur une matrice de mise en forme (3) munie d'une rainure (5) s'étendant selon un axe (x-x) prédéterminé, ladite rainure présentant une forme rectangulaire en section,
- amener ladite gaufrette (14) dans la rainure (5) en actionnant une tige (9) en forme de barre de section rectangulaire à l'intérieur de la rainure, où les deux bords (14c, 14g) de la gaufrette sont rabattus par ladite matrice (3) de mise en forme et disposé verticalement,
- plier lesdits bords (14c, 14g) retournés de la gaufrette sur la tige (9) en forme de barre pour former une gaufrette tubulaire (14h) ayant une forme sensiblement rectangulaire,
- libérer la gaufrette (14h) de forme tubulaire de ladite tige (9) sous forme de barre en enlevant ladite tige (9) de la rainure (5) suivant l'axe (x-x) prédéterminé, et
- remplir la gaufrette tubulaire (14h) avec la crème (25).

2. Méthode selon la revendication 1, **caractérisée en ce que** la gaufrette tubulaire est remplie avec la crème (25) pendant le retrait de la tige (9) en forme de barre, au moyen d'un distributeur de crème logé dans la tige (9) en forme de barre.

3. Appareil (1) de mise en oeuvre de la méthode selon la revendication 1, comprenant un socle (2) supportant une matrice (3) de mise en forme munie d'une rainure (5), ladite rainure s'étendant suivant un axe prédéterminé (x-x) et ayant une forme rectangulaire en section, une tige (9) en forme de barre ayant un axe (a-a) parallèle audit axe (x-x) prédéterminé et une forme rectangulaire en section, ladite tige en forme de barre étant mobile le long d'un axe vertical (z-z) perpendiculaire audit axe (x-x) prédéterminé entre une position haute au-dessus de la rainure (5) et une position basse dans la rainure (5), et étant adaptée pour être déplacée le long dudit axe (x-x) pour son retrait de la rainure (5).

4. Appareil (1) selon la revendication 3, **caractérisé en ce qu'**il comprend en outre deux réglettes (16, 17) guidées pour un mouvement dans le socle (2) le long d'un axe (y-y) perpendiculaire audits axes (x-x, z-z) et déplaçables successivement vers la rainure (5) à partir de leur position respective extraite de ladite rainure.

5. Appareil (1) selon la revendication 4, **caractérisé en ce qu'**il comprend en outre un patin de pression (22) guidé en mouvement vers le socle (2) et déplaçable vers la rainure (5) le long d'un axe vertical (z-z).

6. Appareil (1) selon la revendication 5, **caractérisé en ce que** la lige (9) en forme de barre est tubulaire pour définir un espace interne creux (9a).

7. Appareil (1) selon la revendication 6, **caractérisé en ce qu'**il comprend un distributeur de remplissage disposé dans l'espace interne creux (9a) et fixé à ladite tige (9) en forme de barre.
